# EUROPEAN PATENT APPLICATION

(11) **EP 2 722 699 A1**
(43) Date of publication of application: **23.04.2014**
(21) Application number: 12800696.2
(22) Date of filing: 14.06.2012
(51) Int. Cl.: G02B 6/44

(54) **COMPOSITION FOR COATING OPTICAL FIBER AND OPTICAL FIBER CABLE**

(30) Priority: 14.06.2011 JP 2011132118
(71) Applicant: Mitsubishi Rayon Co., Ltd., Tokyo 100-8253 (JP)
(72) Inventor: KIMURA, Tsuyoshi, Toyama-shi Toyama 931-8601 (JP); TSUKAMOTO, Yoshihiro, Toyama-shi Toyama 931-8601 (JP); ASANO, Kouji, Toyama-shi Toyama 931-8601 (JP); YOSHIOKA, Akira, Otake-shi Hiroshima 739-0693 (JP); AKIHARA, Rie, Otake-shi Hiroshima 739-0693 (JP)
(74) Representative: TBK
(86) International application number: PCT/JP2012/065251
(87) International publication number: WO 2012/173190

(57) **Abstract**

A composition for jacketing an optical fiber including a modified PPE resin containing a polyphenylene ether resin and a thermoplastic resin compatible with the polyphenylene ether resin, and a non halogen-based flame retardant, in which a nitrogen compound is included as the non halogen-based flame retardant and the content of nitrogen element in the composition is in the range of 100000 to 300000 ppm as measured by an elementary analysis.

## Description

### Technical Field

The present invention relates to a composition for jacketing an optical fiber and an optical fiber cable.

### Background Art

A plastic optical fiber (hereinafter, referred to as "POF") has a core-cladding structure in which a core mainly consisting of a resin with high transparency such as polymethyl methacrylate is used and a transparent resin having lower refractive index than that of the core is coated on a periphery of the core, and it is used as various light transmitting materials.

Compared to an optical fiber made of glass, POF has a short transmission distance. However, it has advantages that processing of end faces and handling are easy and also it is less expensive, light-weighted, and can be set to have a large diameter. For such reasons, POF is used for an application in various fields such as lighting, sensors, communication, or the like, and being also used for an application in an automobile, the production amount of POF has a tendency to increase.

Generally, when POF is used, it is hardly used as POF itself except use as lighting. Instead, it is often used as an optical fiber cable in which POF is covered with a resin or the like to have mechanical strength, heat resistance, or flame retardancy. In recent years, as more strict regulations are imposed regarding particularly the flame retardancy of a plastic product, an optical fiber cable is also required to have high flame retardancy.

In Patent Literature 1, a flame retardant plastic optical fiber cable in which a periphery of bare POF consisting of a core made of polymethyl methacrylate and a cladding outside the core with a polypropylene-based resin containing a phosphate ester-based flame retardant and a hindered amine-based stabilizer is disclosed.

In Patent Literature 2, a wire cable covered with a resin composition containing (i) a polyphenylene ether-based resin, (ii) a styrene-based elastomer, (iii) a polyamide resin or a polyester resin, or a mixture thereof, and (iv) a nitrogen-based flame retardant is disclosed.

In Patent Literature 3, an optical fiber cord formed with a jacketing layer containing (i) polyphenylene ether, (ii) a styrene-based resin, (iii) a polyamide-based resin, and (iv) a nitrogen-based flame retardant is disclosed. An optical fiber cord formed with a jacketing layer containing (i) polyphenylene ether, (ii) a styrene-based resin, and (v) a phosphorus-based flame retardant is also disclosed.

### Citation List

### Patent Literature

Patent Literature 1: JP 2004-219815 A
Patent Literature 2: WO 2008/084703 A
Patent Literature 3: JP 2008-197302 A

### Summary of Invention

### Technical Problems

However, when the polypropylene-based resin composition added with a phosphate ester-based flame retardant as disclosed in Patent Literature 1 is covered on POF to form an optical fiber cable, although it is possible to give flame retardancy at certain level, it is difficult to have flame retardancy that is sufficient for passing so-called vertical flame test VW-1 according to the UL (Underwriters Laboratories Inc.) standards.

With the polyphenylene ether-based resin composition added with a phosphorus-based flame retardant or a nitrogen-based flame retardant as disclosed in Citations 2 and 3, even when it is covered on a plastic light guide such as POF to form an optical fiber cable, it is difficult to have flame retardancy that is sufficient for passing the VW-1 flame test.

In addition, POF itself is easily combustible, and when in contact with flame, it exhibits a phenomenon of having a dropping melt (that is, drip). When such drip occurs, it serves as a cause of firing of cotton laid under a subject for combustion, that is prescribed by the standards of the VW-1 flame test, and thus it is difficult to satisfy the standards. When POF exhibits such drip, even when an optical fiber cable is formed by jacketing POF with a resin added with a large amount of a flame retardant having excellent flame retardancy such as halogen-based flame retardant or magnesium hydroxide, it is difficult to suppress combustion of a dropping product caused by drip of the POF itself.

In particular, an optical fiber cable having a thin jacketing layer with a thickness that is 50% or less, or 30% or less than the outer diameter of POF is difficult to satisfy the VW-1. For example, when a jacketing layer with a thickness of 0.25 mm is formed on POF with a diameter of 1.0 mm so that the optical fiber cable has an outer diameter of 1.5 mm (that is, ratio of thickness of jacketing layer: 25%), the flame retardant effect by a flame retardant jacketing layer is not obtained at sufficient level so that combustion of a dropping product caused by drip of the POF itself is significant.

Accordingly, the main object of the present invention is to provide a composition for jacketing an optical fiber, which exhibits high flame retardancy even when covered thinly on an optical fiber, and an optical fiber cable with excellent flame retardancy having the composition used in a jacketing layer.

### Solution to Problem

Inventors of the present invention conducted intensive studies in view of the problems of a related art, and as a result, found that the above object can be achieved by using a specific resin composition added with a nitrogen compound as a composition for jacketing an optical fiber. The present invention is completed accordingly.

Specifically, according to one embodiment of the invention, a composition for jacketing an optical fiber containing a modified PPE resin containing a polyphenylene ether resin and a thermoplastic resin compatible with the polyphenylene ether resin, and a non halogen-based flame retardant, in which a nitrogen compound is contained as the non halogen-based flame retardant, and the content of the nitrogen element in the composition is in the range of 100000 to 300000 ppm as measured by an elementary analysis, is provided.

According to another embodiment of the invention, a fiber cable consisting of an optical fiber having a core and at least one cladding layer outside the core and a jacketing layer for jacketing the optical fiber, in which the jacketing layer consists of the composition described above, is provided.

### Advantageous Effects of Invention

According to one embodiment of the present invention, a composition for jacketing an optical fiber having excellent flame retardancy can be provided. According to another embodiment of the present invention, an optical fiber cable with excellent flame retardancy having the composition used in a jacketing layer can be provided.

### Brief Description of Drawings

FIG. 1 illustrates a cross-sectional view of an exemplary optical fiber cable according to the embodiment of the present invention; and
FIG. 2 illustrates a cross-sectional view of another exemplary optical fiber cable according to the embodiment of the present invention.

### Description of Embodiments

Hereinafter, preferred embodiments of the present invention will be described.

The composition for jacketing an optical fiber according to an embodiment of the present invention contains a modified polyphenylene ether (hereinafter, referred to as "PPE") resin containing a PPE resin and a compatible resin compatible with the PPE resin, and a non halogen-based flame retardant containing a nitrogen compound. When the composition for jacketing is used as a jacketing material for an optical fiber cable, an optical fiber cable with excellent flame retardancy which passes the vertical flame test referred to as VW-1 according to UL (Underwriters Laboratories Inc.) standards is obtained. In addition, since the composition for jacketing does not contain a halogen compound, it does not generate halogen gas during combustion.

### (1) Modified PPE resin

Although PPE itself has high flame retardancy, it has extremely high molding temperature and poor resin fluidity, and thus PPE cannot be used alone. Thus, to increase the fluidity and lowering the molding temperature of PPE, it is commonly used after being mixed with a thermoplastic resin which has high compatibility with PPE and high fluidity. In particular, when a resin is covered on a plastic light guide such as plastic optical fiber (POF) to give a cable, POF itself is easily melt and broken during jacketing when the melt temperature is excessively high, making it difficult to achieve jacketing. For such reasons, when it is used as a jacketing resin for POF, it is necessary to lower a moldable temperature so that it can be melt at a temperature suitable for jacketing of POF. In general, when a thermoplastic resin is covered on a POF, the melt temperature of a jacketing resin is preferably set in the range of 150°C to 230°C. For such reasons, it is preferable the thermoplastic resin used after being mixed with PPE has good compatibility with PPE and the moldable temperature of 230°C or lower. More preferably, it is 150 to 230°C.

### (1-1) Polyphenylene ether resin (PPE)

A known PPE can be used as PPE. Specific examples of PPE include poly(2,6-dimethyl-1,4-phenylene)ether, poly(2,6-diethyl-1,4-phenylene)ether, poly(2-methyl-6-ethyl-1,4-phenylene)ether, poly(2-methyl-6-propyl-1,4-phenylene)ether, poly(2,6-dipropyl-1,4-phenylene)ether, poly(2-ethyl-6-propyl-1,4-phenylene)ether, poly(2,6-dimethoxy-1,4-phenylene)ether, poly(2,6-dichloromethyl-1,4-phenylene)ether, poly(2,6-dibromomethyl-1,4-phenylene)ether, poly(2,6-diphenyl-1,4-phenylene)ether, poly(2,6-ditolyl-1,4-phenylene)ether, poly(2,6-dichloro-1,4-phenylene)ether, poly(2,6-dibenzyl-1,4-phenylene)ether, and poly(2,5-dimethyl-1,4-phenylene)ether. Among them, from the viewpoint of easy and general availability, poly(2,6-dimethyl-1,4-phenylene)ether is particularly preferable.

### (1-2) Thermoplastic resin compatible with PPE

The thermoplastic resin to be mixed with PPE is not particularly limited, if it is compatible with PPE. However, a styrene-based resin generally known as a resin having very good compatibility with PPE can be preferably used.

Examples of the styrene-based resin include a homopolymer of styrene compound that is produced by a common radical polymerization or the like and a copolymer of a monomer copolymerizable with a styrene compound and a styrene compound. Examples of the styrene compound include alkyl-substituted styrene such as styrene, α-methyl styrene, α-ethyl styrene, α-methyl-p-methyl styrene, o-methyl styrene, m-methyl styrene, or p-methyl styrene. Among them, styrene and α-methyl styrene are preferable.

In addition to the styrene-based resin, a styrene-based thermoplastic elastomer can be also used. Examples thereof include polystyrene-polybutadiene, polystyrene-poly(ethylene-propylene), polystyrene-polyisoprene, poly(α-methyl styrene)-polybutadiene, polystyrene-polybutadiene-polystyrene (SBS), polystyrene-poly(ethylene-propylene)-polystyrene, polystyrene-poly(ethylene-butylene)-polystyrene, polystyrene-(ethylene-butylene/styrene copolymer)-polystyrene, polystyrene-polyisoprene-polystyrene, poly(α-methyl styrene)-polybutadiene-poly(α-methyl styrene), and a styrene block copolymer obtained by selective hydrogenation of them.

A content ratio of the thermoplastic resin in the composition for jacketing is preferably in the range of 50 to 100 parts by mass relative to 100 parts by mass of PPE. More preferably, it is 55 to 95 parts by mass, and even more preferably 60 to 90 parts by mass. By having the content ratio of 50 parts by mass or higher, the melt viscosity of a composition for jacketing to be obtained can be sufficiently lowered, and thus a composition preferred as a jacketing material for an optical fiber such as POF can be obtained. Further, by having the content ratio of 100 parts by mass or lower, carbonizing at the time of burning an optical fiber cable can be suppressed and also the effect of suppressing drip of an optical fiber such as POF can be enhanced.

### (1-3) Polyolefin-based resin

The composition for jacketing according to an embodiment of the present invention may also contain a polyolefin-based resin. As for the polyolefin-based resin, it is preferable to use a resin having melt viscosity in the range of 50 to 800 g/10 minutes as measured by JIS K7210 (190°C, 2.16 kg). By using a polyolefin resin having melt viscosity of 50 g/10 minutes or higher, the melt viscosity of the modified PPE resin can be sufficiently lowered. Even when a resin having melt viscosity higher than 800 g/10 minutes is used, it is difficult to recognize a dramatic increase in the effect.

Examples of the polyolefin-based resin include polybutene, polyethylene, low density polyethylene (LDPE), linear low density polyethylene (LLDPE), high density polyethylene (HDPE), and medium density polyethylene (MDPE), and polypropylene, and they may be singly mixed with PPE or mixed with PPE in combination of two or more types.

Further, a copolymer with polyolefin such as ethylene functionalized with vinyl acetate, ethylene functionalized with acrylate, or ethylene functionalized with substituted acrylate group can be used.

Further, for the purpose of lowering the melt viscosity of the entire resin composition, liquid polyolefin may be contained in the polyolefin-based resin to be mixed. The "liquid" of the liquid polyolefin is defined as 500 centistokes (cSt) or less when measured at 100°C according to ASTM D445.

When the composition for jacketing contains a polyolefin-based resin, a content ratio of the polyolefin-based resin in the composition for jacketing is preferably in the range of 30 to 100 parts by mass, more preferably in the range of 40 to 90 parts by mass, and even more preferably in the range of 50 to 70 parts by mass relative to 100 parts by mass of PPE. By having the content ratio of 30 parts by mass or higher, the melt viscosity of a composition for jacketing to be obtained can be sufficiently lowered, and thus a composition preferred as a jacketing material for an optical fiber such as POF can be obtained. Further, by having the content ratio of 100 parts by mass or lower, carbonizing at the time of burning an optical fiber cable can be suppressed and also a sufficient effect of suppressing drip of an optical fiber such as POF can be obtained.

Further, when the composition for jacketing contains a polyolefin-based resin, content ratio of a resin component other than PPE in the composition for jacketing (including the thermoplastic resin and polyolefin-based resin) is preferably 100 parts by mass or more, more preferably 120 parts by mass or more, and even more preferably 130 parts by mass or more relative to 100 parts by mass of PPE. When the content ratio of a resin component other than PPE is excessively low, it is difficult to obtain a sufficient melt state at desired molding temperature (for example, molding temperature preferred for POF cable: 170 to 250°C).

Meanwhile, regardless of the presence or absence of a polyolefin-based resin, content ratio of a resin component other than PPE in the composition for jacketing (including the thermoplastic resin) is preferably 200 parts by mass or less, more preferably 180 parts by mass or less, and even more preferably 170 parts by mass or less relative to 100 parts by mass of PPE. When an amount of the resin component other than PPE is excessively high, contribution of flame retardancy by PPE itself is lowered.

### (2) Flame retardant

In the composition for jacketing an optical fiber according to an embodiment of the present invention, a non halogen-based flame retardant is added to a modified PPE resin. The non halogen-based flame retardant contains a nitrogen compound as a nitrogen-based flame retardant. As a result, the self-extinguishing property is improved at combustion of a jacketing layer of an optical fiber cable, and thus the flame retardancy of an optical fiber cable can be increased. The halogen-based flame retardant may also contain a phosphorus compounds as a phosphorus-based flame retardant.

### (2-1) Nitrogen compound

As for the nitrogen compound, it is possible to use a melamine-based compound, a triazine-based compound, a urea-based compound, a guanidine-based compound, and a tetrazole-based compound, for example.

As for the melamine-based compound, it is possible to use a compound having a melamine skeleton or a salt thereof. For example, it is possible to use melamine, a melamine derivative such as melam, melem, or melon that are the condensate of melamine, cyanuric acid, melamine cyanurate as a salt of melamine and cyanuric acid, inorganic salt of melamine such as melamine sulfate, and a mixture of melamine and melamine cyanurate.

As for the triazine-based compound, a compound having a triazine skeleton can be used. For example, it is possible to use acetoguanamine, benzoguanamine, acryl guanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, 2-amino-4,6-dimercapto-1,3,5-triazine, and a mixture of two or more types selected from them.

As for the urea-based compound, a compound having a urea skeleton or a salt thereof can be used. For example, phosphoric acid guanyl urea can be used.

As for the guanidine-based compound, a compound having a guanidine skeleton or a salt thereof can be used. For example, sulfamic acid guanidine and phosphoric acid guanidine can be used.

As for the tetrazole-based compound, a compound having a tetrazole skeleton or a salt thereof can be used, and a metal salt or an amine salt of a tetrazole compound can be used. Specifically, 5,5-bi-1H-tetrazole - diammonium, 5,5-bi-1H-tetrazole · piperzaine, 5,5-bi-1H-tetrazole - diguanidine, and a barium, calcium, potassium, lithium, zinc, or sodium salt of bistetrazole can be exemplified.

Those nitrogen compounds can be used either singly or in combination of two or more types.

Among them, the melamine-based compound can be preferably used.

Examples of a melamine-based flame retardant using melamine-based compound include melamine cyanurate, inorganic salt of melamine such as sulfuric acid melamine, and a mixture of melamine and melamine cyanurate. For example, STABIACE MC-2010N (trade name, manufactured by Sakai Chemical Industry Co., Ltd.), MELAPUR MC 25 (trade name, manufactured by BASF), MELAPUR 200/70 (trade name, manufactured by BASF), and APINON-901 (trade name, manufactured by Sanwa Chemical Co., Ltd.) can be mentioned as a melamine-based fire retardant. Because the nitrogen-based flame retardant is decomposed at combustion to generate inert gas, it can enhance the flame retardancy of the composition for jacketing (that is, self-extinguishing property).

Content of the nitrogen compound is preferably 5 to 60% by mass, more preferably 10 to 50% by mass, and even more preferably 20 to 40% by mass relative to the modified PPE resin. By having the content of 5% by mass or more, sufficient flame retardancy can be given to the composition for jacketing. Even when the content is higher than 60% by mass, it is difficult to recognize a dramatic increase in the addition effect.

As a non halogen-based flame retardant according to an embodiment of the present invention, the nitrogen compound described above can be used singly, or a phosphorus compound described below can be used in combination in addition to the nitrogen compound.

### (2-2) Phosphorus compound

By adding a phosphorus compound to the modified PPE resin, carbonizing at combustion of an optical fiber cable is promoted and drip of an optical fiber itself such as POF can be strongly suppressed.

Examples of the phosphorus compound include, in addition to an inorganic phosphorus compound such as red phosphorus, an organophosphorus compound including an aromatic phosphoric acid ester such as triphenyl phosphate, tricresyl phosphate, trixylenyl phosphate, cresyl diphenyl phosphate, or 2-ethylhexyl diphenyl phosphate; and aromatic condensed phosphoric acid ester such as resorcinol bis-diphenyl phosphate, resorcinol bis-dixylenyl phosphate, or bisphenol A bis-diphenyl phosphate. Examples also include a phosphoric acid salt such as ammonium phosphate or melamine phosphate; condensed phosphoric acid salt such as ammonium polyphosphate and melamine polyphosphate; phosphoric acid amide, and condensed phosphoric acid amide. Among them, at least one phosphoric acid compound selected from phosphoric acid ester, condensed phosphoric acid ester, phosphoric acid salt, condensed phosphoric acid salt, phosphoric acid amide, and condensed phosphoric acid amide can be preferably used. In particular, phosphoric acid ester, condensed phosphoric acid ester, phosphoric acid salt, or condensed phosphoric acid salt can be preferably used. The phosphorus compound may be used ether singly or in combination of two or more types.

As for the phosphorus compound, those used as a phosphorus-based flame retardant can be used, and there are commercially available products such as REOFOS series (trade name), which is a phosphoric acid ester-based flame retardant by Ajinomoto Fine-Techno Co., Inc., a non halogen phosphoric acid ester-based flame retardant by Daihachi Chemical Industry Co., Ltd., NOVA pellet (trade name), which is a red phosphorus-based flame retardant by Rin Kagaku Kogyo Co., Ltd., and TAIEN series (trade name), which is an inorganic phosphorus-based flame retardant by Taihei Chemical Industrial Co., Ltd., for example.

Content of the phosphorus compound is preferably 5 to 50% by mass, more preferably 7 to 40% by mass, and even more preferably 10 to 30% by mass relative to the modified PPE resin. By having the content of 5% by mass or more, sufficient flame retardancy can be given to the composition for jacketing. Even when the content is higher than 50% by mass, it is difficult to recognize a dramatic increase in the addition effect.

Further, the mixing ratio of the phosphorus compound relative to the nitrogen compound is not particularly limited, if sufficient flame retardancy is obtained. For example, relative to 100 parts by mass of the nitrogen compound, it is preferably 5 to 100 parts by mass, more preferably 10 to 90 parts by mass, and even more preferably 20 to 80 parts by mass. By having the mixing ratio of 5 parts by mass or more for the phosphorus compound, the self-extinguishing property according to release of nitrogen-based gas at combustion can be enhanced and simultaneously a flame extinguishing property based on a heat-blocking effect as caused by promoted carbonizing of the phosphorus compound can be increased. Meanwhile, because an organophosphorus compound also has an effect as a plasticizer, from the viewpoint of suppressing a decrease in mechanical strength and plasticization of a resin composition, the mixing ratio of the phosphorus compound is preferably 100 parts by mass or less.

As a phosphorus compound, an intumescent-based flame retardant can be used. The intumescent-based flame retardant is a mixture of flame retardant that is obtained by mixing a compound containing, in the same molecule, a phosphorus component for promoting carbonizing and a nitrogen compound for promoting extinguishing · foaming, or a compound containing a phosphorus compound and a compound containing a nitrogen component. Examples thereof include a phosphoric acid salt such as ammonium phosphate, melamine phosphate, phosphoric acid guanyl urea, melamine pyrophosphoric acid, or piperazine pyrophosphoric acid; condensed phosphoric acid salt such as ammonium polyphosphate or melamine polyphosphate; and a phosphoric acid-based nitrogen-containing compound such as phosphoric acid amide or condensed phosphoric acid amide. In addition, a mixture of the phosphorus compound and the nitrogen compound described above, or a combination of those compounds or mixtures with a phosphoric acid-based nitrogen-containing compound can be used.

Examples of a commercially available intumescent-based flame retardant include ADEKA STAB FP-2100J (trade name, manufactured by ADEKA Corporation), ADEKA STAB FPP-2200S (trade name, manufactured by ADEKA Corporation), APINON-405 (trade name, manufactured by Sanwa Chemical Co., Ltd.), MPP-B (trade name, manufactured by Sanwa Chemical Co., Ltd.), PHOSMEL-200 (trade name, manufactured by Nissan Chemical Industries, Ltd.), FIRE CUT FCP-770 (trade name, manufactured by SUZUHIRO CHEMICAL Co., Ltd.), STABIACE SCFR-110 (trade name, manufactured by Sakai Chemical Industry Co., Ltd.), and STABIACE SCFR-200 (trade name, manufactured by Sakai Chemical Industry Co., Ltd.).

### (2-3) Flame retardant aid

For the purpose of enhancing the flame retardant effect of a flame retardant, as a flame retardant aid, metal hydroxides such as magnesium hydroxide or aluminum hydroxide, and an inorganic material such as a silicone-based compound, talc, zinc oxide, or titanium oxide may be added to the modified PPE resin.

### (2-4) Content of nitrogen element and content of phosphorus element

Content of a flame retardant component in the composition for jacketing an optical fiber can be defined by content of the nitrogen element, or content of the nitrogen element and content of the phosphorus element contained in the composition.

Content of the nitrogen element in the composition for jacketing an optical fiber is, in terms of a value measured by an elementary analysis, preferably in the range of 100000 to 300000 ppm. More preferably, it is 120000 to 260000 ppm, even more preferably 140000 to 250000 ppm, and particularly preferably 160000 to 240000.

By having the nitrogen element content of 100000 ppm or higher in the composition for jacketing an optical fiber, sufficient flame retardancy can be given to the composition. Meanwhile, by having the content of 300000 ppm or lower, strength of the composition (jacketing layer) can be sufficiently maintained so that a decrease in the handlability during jacketing onto an optical fiber can be suppressed.

When a phosphorus compound is used as a flame retardant, content of the phosphorus element in the composition for jacketing an optical fiber is, in terms of a value measured by an elementary analysis, preferably in the range of 10000 to 80000 ppm. More preferably, it is 12000 to 70000 ppm, even more preferably 14000 to 60000 ppm, and particularly preferably 15000 to 60000.

By having the phosphorus element content of 10000 ppm or higher in the composition for jacketing an optical fiber, sufficient flame retardancy can be given to the composition. Meanwhile, by having the phosphorus element content of 80000 ppm or lower, strength of the composition (jacketing layer) can be sufficiently maintained and also a decrease in the self-extinguishing property can be suppressed.

### (3) Other additives

For the purpose of enhancing recognizability or designability of an optical fiber cable, the composition for jacketing an optical fiber may be added with various pigments within a range that does not inhibit its characteristics. As for the pigments, a known pigment selected from an inorganic pigment and an organic pigment can be used. Examples of a white pigment include titanium dioxide and zinc oxide. Examples of a yellow pigment include an azo-based organic pigment, yellow lead, chrome sulfide, and zinc sulfide. Examples of a blue pigment include deep blue (that is, ultramarine blue) and cobalt blue. Examples of a green pigment include chrome oxide and cobalt green. In particular, titanium dioxide and zinc oxide are preferred as a white pigment.

Among them, from the viewpoint of a shielding property or a coloring power, titanium dioxide is particularly preferred. Deep blue and chrome oxide are especially preferred as a blue pigment and a green pigment, respectively, from the viewpoint of a shielding property or a coloring power.

Content of the pigment is, although not particularly limited, preferably 0.5 to 10% by mass, more preferably 1 to 7% by mass, and even more preferably 3 to 5% by mass relative to the total weight of the composition for jacketing an optical fiber.

By having the pigment content of 0.5% by mass or more, a sufficient effect of addition such as coloration is obtained. Further, by having the pigment content of 10% by mass or lower, mechanical strength of the composition (that is, jacketing layer) can be sufficiently maintained so that a decrease in optical characteristics that is caused by migration of pigment to inside of the optical fiber can be suppressed.

### (4) Optical fiber cable

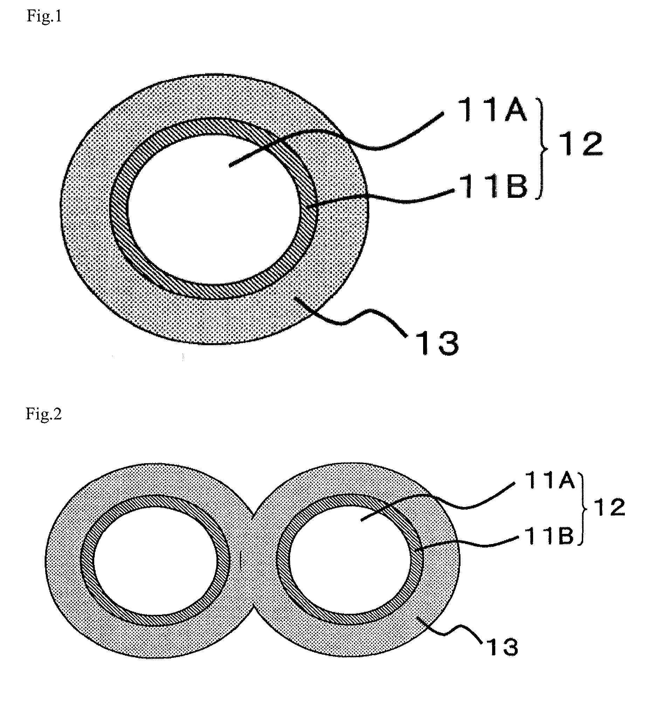

The optical fiber cable according to an embodiment of the present invention includes, as illustrated in FIGS. 1 and 2, core (11A) for light propagation, cladding (11B) for total reflection of light to periphery thereof, and jacketing layer (13) for imparting flame retardancy and mechanical strength to periphery thereof. The optical fiber cable according to an embodiment of the invention may be a single optical fiber cable as illustrated in FIG. 1, or it may be two or more optical fiber cables that are connected via a jacketing material as illustrated in FIG. 2. It is also possible that plural optical fibers are bundled together and covered with a jacketing material.

Type of the optical fiber for the optical fiber cable according to an embodiment of the present invention is not particularly limited, and an optical fiber made of glass or an optical fiber made of plastics can be used, for example.

Type of the optical fiber made of glass is not limited and known fibers including quartz glass fiber in which both the core and cladding consist of quartz glass and a polymer clad silica fiber (PCS) in which the core consists of quartz glass and the cladding consists of a resin such as a fluororesin can be used.

Type of the optical fiber made of plastics (POF) is not limited, and known fibers can be used, and any fiber having a function as an optical fiber can be used.

As for the optical fiber for the optical fiber cable according to an embodiment of the present invention, it is preferable to use POF, because the jacketing effect of the composition for jacketing an optical fiber according to an embodiment of the present invention, in particular, the effect of imparting flame retardancy can be preferably exhibited.

Examples of POF include GI type POF in which refractive index of the core continuously decreases from the center toward the periphery, a multilayer POF in which refractive index of the core decreases in stepwise manner from the center toward the periphery, and multi core POF in which plural cores are wrapped with a cladding and bundled into one. Among them, from the viewpoint of performing high speed signal transmission by having a broad band of POF, it is preferable to use a multilayer POF.

Material for the core is not particularly limited, and it can be suitably selected depending on a purpose of use or the like. For example, use of a polymer with high transparency is preferable. Preferred examples of the polymer with high transparency include a polymer containing a methacrylate unit. Examples of such polymer include a homopolymer of methyl methacrylate and a copolymer having a methyl methacrylate unit as a main constitutional unit, and a polymer having a fluorinated alkyl methacrylate unit as a main constitutional unit. Among them, the homopolymer of methyl methacrylate and the copolymer having a methyl methacrylate unit as a main constitutional unit are preferable. It is preferable that the copolymer contains the methyl methacrylate unit preferably at 50% by mass or more, more preferably at 60% by mass or more, and even more preferably at 70% by mass or more. From the viewpoint having excellent heat resistance and transparency, the homopolymer of methyl methacrylate is particularly preferable.

The cladding formed on a periphery of the core may be formed in a single layer or in a multilayer with two or more layers. Cladding material for POF is not particularly limited, if it has lower refractive index than a core material, and those commonly used as a cladding material can be used. When a methyl methacrylate (MMA)-based polymer is used as a core material, for example, as a cladding material, a fluorine-based polymer such as fluorovinylidene-based polymer, a perfluloroalkyl methacrylate-based polymer, a methacrylic acid ester-based polymer and a copolymer of a perfluloroalkyl methacrylate-based compound and a (meth)acrylate-based compound can be used. Examples of the fluorovinylidene polymer include polyfluorovinylidene, a copolymer containing a fluorovinylidene unit, for example, a fluorovinylidene-tetrafluroethylene copolymer, a fluorovinylidene-hexafluoropropylene copolymer, a fluorovinylidene-hexafluoroacetone copolymer, a fluorovinylidene-tetrafluoroethylene-hexafluoropropylene copolymer, a fluorovinylidene-trifluoroethylene copolymer, and a ter- or higher copolymer containing a fluorovinylidene unit and other unit.

POF can be produced by a common method such as melt spinning. Further, when the optical fiber cable is used in an environment with severe temperature variation, it is preferable to perform an annealing treatment by a continuous or a batch treatment as pistoning can be suppressed.

With regard to the POF according to an embodiment of the present invention, the diameter is preferably set in the range of 500 µm to 1200 µm, for example, from the viewpoint of desired transmission characteristics, handlability, or the like. It is more preferably in the range of 700 µm to 1100 µm, and even more preferably in the range of 750 µm to 1000 µm.

Thickness of the cladding of POF is, from the viewpoint of having total reflection of light passing through the core, preferably in the range of 3 to 30 µm. It is more preferably in the range of 4 to 20 µm, and even more preferably in the range of 5 to 15 µm. When the thickness of cladding is 3 µm or less, it is difficult to have total reflection of light in the core. On the other hand, when the thickness of the cladding is higher than 30 µm, diameter of the core is limited by the thickness of the cladding, and thus a light amount propagating along the optical fiber is lowered and also it if difficult to recognize a sufficient improving effect by thickening of the cladding on light propagation.

The optical fiber cable according to an embodiment of the present invention includes an optical fiber such as POF described above and a jacketing layer for jacketing the optical fiber. With regard to a material for the jacketing layer, the composition for jacketing an optical fiber according to an embodiment of the present invention described above is used. By using the composition for jacketing an optical fiber, the optical fiber cable can be given with sufficient flame retardancy.

As a method for forming a jacketing layer on a periphery of the optical fiber, a known extrusion jacketing method using a crosshead type jacketing apparatus equipped with an extruder can be adopted, for example. Further, for a case in which the jacketing layer has a plural layer structure, each single layer may be formed in order or plural layers may be formed simultaneously.

For a case in which a crosshead type jacketing apparatus equipped with an extruder is used for forming a jacketing layer on a periphery of the optical fiber, the extruder temperature is preferably in the range of 170 to 250°C, more preferably in the range of 180 to 240°C, and even more preferably in the range of 190 to 230°C.

By having the extruder temperature of 170°C or higher, the composition for jacketing an optical fiber can be melt more homogeneously and also extrusion stability can be sufficiently maintained, and thus the jacketing layer can be favorably formed. Further, by having the extruder temperature of 250°C or lower, deterioration of additives such as the pigment for coloration or flame retardant is suppressed so that coloration or deterioration of the jacketing layer can be prevented.

Further, the crosshead die temperature is preferably in the range of 190 to 230°C, more preferably in the range of 180 to 225°C, and even more preferably in the range of 195 to 220°C.

By having the crosshead die temperature of 190°C or higher, the composition for jacketing an optical fiber can be melt more homogeneously and also extrusion stability can be sufficiently maintained, and thus the jacketing layer can be favorably formed. Further, by having the extruder temperature of 230°C or lower, deterioration of performance caused by heat can be suppressed in particular, when POF is used as an optical fiber.

In general, an optical fiber cable with diameter (outer diameter) of 1.5 mm or 2.2 mm is widely used, for example. Considering that a generally used optical fiber such as POF has a diameter (outer diameter) of 1.0 mm, thickness of the jacketing layer is set to 0.25 mm or so for an optical fiber cable with diameter of 1.5 mm, or to 0.6 mm or so for an optical fiber cable with diameter of 2.2 mm.

For an optical fiber cable with diameter of 2.2 mm, it is possible to have a thick jacketing layer so that sufficient flame retardancy is easily ensured. However, for an optical fiber cable with diameter of 1.5 mm, thickness of the jacketing layer is so thin that it is difficult to ensure flame retardancy of the optical fiber cable.

However, the optical fiber cable formed with a jacketing layer of the composition for jacketing an optical fiber according to an embodiment of the present invention can have excellent flame retardancy even when the thickness of the jacketing layer is 60% or less, 50% or less according to a preferred embodiment, 40% or less according to a more preferred embodiment, 30% or less according to an even more preferred embodiment, or as thin as 20 to 25% according to a particularly preferred embodiment relative to the diameter of the optical fiber (for example, POF), and it can also have flame retardancy not easily having a drip of the optical fiber cable and the optical fiber itself when brought into contact with flame (that is, drip resistance) and passing the VW-1 flame test according to UL standards. Thinner jacketing layer is preferred as the diameter of the optical fiber is maintained while the diameter of the optical fiber cable is suppressed. However, from the viewpoint of ensuring a sufficient jacketing function, flame retardant effect, and drip resistance, thickness of the jacketing layer is preferably 10% or higher, more preferably 20% or higher, and even more preferably 23% or higher relative to the diameter of the optical fiber (for example, POF).

The optical fiber cable according an embodiment of the present invention can be applied to wiring in a field of short or medium range communication like a network in a place such as hospital or official organization in which many people gather, an intra-office network, or a network like LAN such as home network for a house.

### Examples

Hereinafter, the present invention will be described further by way of Examples, but the scope of the present invention is not limited to Examples. Each evaluation method of Examples is as follows.

### [Flame test]

Flame test was performed according to VW-1 (vertical flame test) conforming to UL1581. One sample was subjected to a flame contact test of 15 seconds x 5 times. When surgical cotton placed under the sample exhibits no combustion caused by drip of a combustion product and fire is extinguished within 60 seconds when the sample (that is, optical fiber cable) is on fire, it is graded as pass. The flame test was performed for 15 samples of each Example and each Comparative Example, and total number of passes was described as pass in the table.

### [Content of nitrogen element and phosphorus element]

Content of each element in the composition was measured by elementary analysis. As an apparatus for measurement, all-automatic element analyzer manufactured by Elementar was used (trade name: VARIO EL III). Measurement conditions are described below.
Measurement mode: CHNS mode
Temperature of combustion pipe: 1150°C
Temperature of reduction pipe: 850°C
Flow amount of oxygen: 35 mL/min
Time for oxygen supply: 120 seconds
Standard reagent: Sulfanilic acid

### [Transmission loss]

According to a 25 m to 5 m cut back method, transmission loss (dB/km) was measured. Light with detection wavelength of 650 nm and incident light NA (number of aperture) of 0.1 was used.

### [Long term thermal resistance test]

Transmission loss after 3000 hours under temperature condition of 70°C was measured. When the transmission loss after 3000 hours is 170 dB/km or lower, it was graded as pass under the long term thermal resistance test.

### [Long term wet heat test]

Transmission loss after 3000 hours under temperature condition of 60°C 95%RH was measured. When the transmission loss after 3000 hours is 200 dB/km or lower, it was graded as pass under the long term wet heat test.

### [Example 1]

As a core material, a homopolymer of methyl methacrylate (MMA), that is, PMMA, was used and as a cladding material, a fluorovinylidene-tetrafluoroethylene copolymer (fluorovinylidene/tetrafluoroethylene = 80/20 (mol%)) was used. After melting them, they were laminated in order radially from the center and subjected to composite spinning to obtain POF of 1.0 mm in outer diameter consisting of a core (core diameter of 980 µm) and a cladding layer (thickness of 10 µm).

Subsequently, the jacketing layer was formed as follows. To a modified PPE resin (manufactured by Sabic, trade name: NORYL WCD801A, content of nitrogen element: 39000 ppm, and content of phosphorus element: 18100 ppm) consisting of a mixture of polyphenylene ether and polystyrene-based resin, melamine cyanurate (manufactured by Sakai Chemical Industry Co., Ltd., trade name: STABIACE MC-3S) as a nitrogen-based flame retardant was added at 30% by mass relative to the modified PPE resin. A composition for jacketing an optical fiber was obtained by kneading.

To a periphery of POF, the composition for jacketing was covered at 220°C to obtain an optical fiber cable of 1.5 mm in outer diameter (thickness of the jacketing layer was 25% relative to the outer diameter of POF).

As a result of performing elementary analysis of the obtained composition for jacketing, it was found that content of nitrogen element is 185100 ppm and content of phosphorus element is 18800 ppm. Meanwhile, small amounts of nitrogen element and phosphorus element are contained in the modified PPE resin (commercially available product) before addition of melamine cyanurate (that is, a nitrogen-based flame retardant), and it is believed that those results originate from a flame retardant or the like which has been already contained in the commercially available product.

The obtained optical fiber cable exhibited initial transmission loss of 135 dB/km, and the transmission loss after 3000 hours at 70°C was 140 dB/km. In addition, the transmission loss of the optical fiber cable was 178 dB/km after keeping for 3000 hours under an environment of 60°C 95%RH, indicating a favorable result.

As a result of performing a flame test for 15 samples of the optical fiber cable, due to a high self-extinguishing property, the flame was instantly extinguished as soon as the sample is detached from the flame. Thus, high flame retardancy was exhibited and all 15 samples were graded as pass.

Evaluation results of the elementary analysis, transmission loss, and flame test are described in Tables 1 and 2.

### [Comparative Example 1]

POF of 1.0 mm in outer diameter consisting of a core (core diameter of 980 µm) and a cladding layer (thickness of 10 µm) was produced in the same manner as Example 1.

Subsequently, a modified PPE resin (manufactured by Sabic, trade name: NORYL WCD801A, content of nitrogen element: 39000 ppm, and content of phosphorus element: 18100 ppm) was covered at 220°C on a periphery of POF to obtain an optical fiber cable with outer diameter of 1.5 mm.

The obtained optical fiber cable exhibited the transmission loss of 131 dB/km after 3000 hours at 70°C. In addition, the transmission loss of the optical fiber cable was 165 dB/km after keeping for 3000 hours under an environment of 60°C 95%RH, indicating a favorable result.

The obtained optical fiber cable was subjected to a flame test. As a result, although the resin itself has a self-extinguishing property at certain level, a drip of POF itself occurred at combustion, and thus it was graded as fail under VW-1 test.

Evaluation results of the elementary analysis and transmission loss are described in Table 1 and Table 2.

### [Comparative Example 2]

An optical fiber cable with an outer diameter of 1.5 mm was produced in the same manner as Example 1 except that a modified PPE resin (manufactured by Sabic, trade name: NORYL WCD801A) added with 20% by mass of a phosphorus compound (trade name: ADEKA STAB FP-2200S, manufactured by ADEKA Corporation) as a flame retardant is used as a material for jacketing layer.

As a result of performing a flame test for the obtained optical fiber cable, there was no drip of POF itself and the underlaid cotton was not combusted, but part of it was not extinguished within 60 seconds.

Evaluation results of the elementary analysis of the jacketing layer (content of nitrogen element and content of phosphorus element), flame test, and transmission loss are described in Tables 1 and 2.

### [Example 2]

An optical fiber cable with an outer diameter of 1.5 mm was produced in the same manner as Example 1 except that a modified PPE resin (manufactured by Sabic, trade name: NORYL WCD801A) added with 5% by mass of a phosphorus-based flame retardant consisting of a polyphosphate melamine compound (manufactured by ADEKA Corporation, trade name: ADEKA STAB FP-2200S) and 40% by mass of melamine cyanurate as a nitrogen-based flame retardant (manufactured by Sakai Chemical Industry Co., Ltd., trade name: STABIACE MC-2010N) is used as a material for jacketing layer (that is, composition for jacketing).

As a result of performing a flame test of the obtained optical fiber cable, no drip has occurred as there is a good balance between formation of a carbonized layer and self-extinguishing property, thus exhibiting high flame retardancy. Evaluation results of the elementary analysis (content of nitrogen element and content of phosphorus element) of the composition for jacketing, flame test, and transmission loss are described in Tables 1 and 2.

### [Example 3]

An optical fiber cable with an outer diameter of 1.5 mm was produced in the same manner as Example 1 except that a modified PPE resin (manufactured by Sabic, trade name: NORYL WCD801A) added with 5% by mass of pyrophosphate salt as a flame retardant (manufactured by ADEKA Corporation, trade name: ADEKA STABICASE SCFR-200) and 40% by mass of melamine cyanurate as a nitrogen-based flame retardant (manufactured by Nissan Chemical Industries, Ltd ., trade name: MC4000) is used as a material for jacketing layer (that is, composition for jacketing).

The flame test result of the obtained optical fiber cable was good. Evaluation results of the elementary analysis (content of nitrogen element and content of phosphorus element) of the composition for jacketing, flame test, and transmission loss are described in Tables 1 and 2.

### [Example 4]

An optical fiber cable with an outer diameter of 1.5 mm was produced in the same manner as Example 1 except that a modified PPE resin (manufactured by Sabic, trade name: NORYL WCD801A) added with 40% by mass of a phosphorus-based flame retardant consisting of polyphosphate melamine (manufactured by ADEKA Corporation, trade name: ADEKA STAB FP-2200S) and 10% by mass of melamine cyanurate as a nitrogen-based flame retardant (manufactured by Nissan Chemical Industries, Ltd ., trade name: MC4000) is used as a material for jacketing layer (that is, composition for jacketing).

As a result of performing a flame test of the obtained optical fiber cable, no drip has occurred at combustion, exhibiting high flame retardancy. Evaluation results of the elementary analysis (content of nitrogen element and content of phosphorus element) of the composition for jacketing, flame test, and transmission loss are described in Tables 1 and 2.

### [Example 5]

An optical fiber cable with an outer diameter of 1.5 mm was produced in the same manner as Example 1 except that a modified PPE resin (manufactured by Sabic, trade name: NORYL WCD801A) added with 5% by mass of bisphenol A bis-diphenyl phosphate type organophosphate salt (manufactured by ADEKA Corporation, trade name: ADEKA STAB FP-600) and 30% by mass of melamine cyanurate as a nitrogen-based flame retardant (manufactured by Sakai Chemical Industry Co., Ltd., trade name: STABIACE MC-5F) is used as a material for jacketing layer (that is, composition for jacketing).

The flame test result of the obtained optical fiber cable was good. Evaluation results of the elementary analysis (content of nitrogen element and content of phosphorus element) of the composition for jacketing, flame test, and transmission loss are described in Tables 1 and 2.

### [Comparative Example 3]

An optical fiber cable with an outer diameter of 1.5 mm was produced in the same manner as Example 1 except that a modified PPE resin (manufactured by Sabic, trade name: NORYL WCD801A) added with 10% by mass of melamine cyanurate as a nitrogen-based flame retardant (manufactured by Sakai Chemical Industry Co., Ltd., trade name: STABIACE MC3S) is used as a material for jacketing layer.

As a result of performing a flame test of the obtained optical fiber cable, sufficient flame retardancy was not exhibited even though the flame is extinguished within 60 seconds. In many combustion tests, drip of POF occurred after detaching from the fire and the underlaid cotton was combusted. Evaluation results of the elementary analysis (content of nitrogen element and content of phosphorus element) of the jacketing material, flame test, and transmission loss are described in Tables 1 and 2.

### [Comparative Example 4]

An optical fiber cable with an outer diameter of 1.5 mm was produced in the same manner as Example 1 except that 50 parts by mass of ethylene-ethyl acrylate copolymer (EEA) added with, as a flame retardant, 45 parts by mass of magnesium hydroxide and 5 parts by mass of red phosphorus are used as a material for jacketing layer.

As a result of performing a flame test of the obtained optical fiber cable, self-extinguishing property of the resin itself was high but drip of POF itself occurred at combustion, and thus it was graded as fail under the VW-1 test. Evaluation results of the elementary analysis (content of nitrogen element and content of phosphorus element) of the jacketing material, flame test, and transmission loss are described in Tables 1 and 2.

### [Comparative Example 5]

An optical fiber cable with an outer diameter of 1.5 mm was produced in the same manner as Example 1 except that polyamide 12 resin (manufactured by Daicel-Evonik Ltd., trade name: DAIAMID L1640) added with 40% by mass of melamine cyanurate as a nitrogen-based flame retardant (manufactured by Nissan Chemical Industries, Ltd., trade name: MC4000) is used as a material for jacketing layer.

As a result of performing a flame test of the obtained optical fiber cable, self-extinguishing property of the resin itself was high but drip of POF itself occurred at combustion, and thus it was graded as fail under the VW-1 test. Evaluation results of the elementary analysis (content of nitrogen element and content of phosphorus element) of the jacketing material, flame test, and transmission loss are described in Tables 1 and 2.

### [Comparative Example 6]

An optical fiber cable with an outer diameter of 1.5 mm was produced in the same manner as Example 1 except that 100 parts by mass of a resin composition (manufactured by Prime Polymer Co., Ltd., Y-400GP), in which a polypropylene resin and a styrene-ethylene-butadiene-styrene copolymer (SEBS) are mixed at weight ratio of 80/20, added with 1.2 parts by mass of NOR type HALS-based stabilizer (manufactured by Chiba Specialty Chemicals Corporation, trade name: Ciba Flamestab NOR-116) and 5 parts by mass of bisphenol A bis-diphenyl phosphate type organophosphate salt (manufactured by ADEKA Corporation, trade name: ADEKA STAB FP-600) as a phosphorus-based flame retardant, are used as a material for jacketing layer.

As a result of performing a flame test of the obtained optical fiber cable, self-extinguishing property of the resin itself was high but drip of POF itself occurred at combustion, and thus it was graded as fail under the VW-1 test. Evaluation results of the elementary analysis (content of nitrogen element and content of phosphorus element) of the jacketing material, flame test, and transmission loss are described in Tables 1 and 2.

**[Table 1]**

| | Resin | Addition amount of phosphorus-based flame retardant (% by mass) | | | Addition amount of nitrogen-based flame retardant (% by mass) | | | | Addition amount of other additives (% by mass) | | | Content of nitrogen element [ppm] | Content of phosphorus element [ppm] |
|---|---|---|---|---|---|---|---|---|---|---|---|---|---|
| | | A | B | C | MC-1 | MC-2 | MC-3 | MC-4 | Red phosphorus | Mg(OH)₂ | HALS | | |
| Example 1 | Modified PPE | | | | 30 | | | | | | | 185100 | 18800 |
| Example 2 | Modified PPE | 10 | | | | 40 | | | | | | 202200 | 28050 |
| Example 3 | Modified PPE | | 5 | | | | 40 | | | | | 230000 | 24700 |
| Example 4 | Modified PPE | 40 | | | | | 10 | | | | | 166800 | 52400 |
| Example 5 | Modified PPE | | | 5 | | | | 30 | | | | 184600 | 19500 |
| Comparative Example 1 | Modified PPE | | | | | | | | | | | 39200 | 18100 |
| Comparative Example 2 | Modified PPE | 20 | | | | | | | | | | 80190 | 40900 |
| Comparative Example 3 | Modified PPE | | | | 10 | | | | | | | 84100 | 18290 |
| Comparative Example 4 | EEA | | | | | | | | 5 | 45 | | - | 38920 |
| Comparative Example 5 | PA12 | | | | | | 40 | | | | | 193000 | - |
| Comparative Example 6 | PP | | | 5 | | | | | | | 1.2 | 500 | 2800 |

| | | | | | | | | | | | | | |
|---|---|---|---|---|---|---|---|---|---|---|---|---|---|
| Modified PPE: NORYL WCD 801A manufactured by SABIC EEA: ELVAROY AC EEA 2715 manufactured by Mitsui DuPont Polychemical Co., Ltd. PA12: DAIAMID L1640 manufactured by Daicel-Evonik Ltd. PP: Y-400GP manufactured by Prime Polymer Co., Ltd. Phosphorus-based flame retardant A: FP-2200S manufactured by ADEKA Corporation Phosphorus-based flame retardant B: SCFR-200 manufactured by Sakai Chemical Industry Co., Ltd. Phosphorus-based flame retardant C: FP-600 manufactured by ADEKA Corporation MC-1: STABIACE MC-3S manufactured by Sakai Chemical Industry Co., Ltd. MC-2: STABIACE MC-2010N manufactured by Sakai Chemical Industry Co., Ltd. MC-3: MC4000 manufactured by Nissan Chemical Industries, Ltd. MC-4: STABIACE MC-5F manufactured by Sakai Chemical Industry Co., Ltd. HALS: NOR-116, NOR type HALS-based stabilizer manufactured by Chiba Specialty Chemicals Corporation | | | | | | | | | | | | | |

**[Table 2]**

| | Resin | Content of nitrogen element [ppm] | Content of phosphorus element [ppm] | Occurrence of POF drip* | Pass ratio under combustion test | Grade by combustion test | Transmission loss after 3000 h at 70°C (dB/km) | Transmission loss after 3000 h at 60°C, 95%RH (dB/km) |
|---|---|---|---|---|---|---|---|---|
| Example 1 | Modified PPE | 185100 | 18800 | No | 15/15 | Pass | 135 | 178 |
| Example 2 | Modified PPE | 202200 | 28050 | No | 15/15 | Pass | 155 | 186 |
| Example 3 | Modified PPE | 230000 | 24700 | No | 15/15 | Pass | 153 | 181 |
| Example 4 | Modified PPE | 166800 | 52400 | No | 15/15 | Pass | 162 | 195 |
| Example 5 | Modified PPE | 184600 | 19500 | No | 15/15 | Pass | 136 | 165 |
| Comparative Example 1 | Modified PPE | 39200 | 18500 | Yes | 9/15 | Fail | 131 | 165 |
| Comparative Example 2 | Modified PPE | 80190 | 40900 | No | 6/15 | Fail | 159 | 187 |
| Comparative Example 3 | Modified PPE | 84100 | 18290 | Yes | 2/15 | Fail | 139 | 171 |
| Comparative Example 4 | EEA | - | 38920 | Yes | 3/15 | Fail | 141 | 166 |
| Comparative Example 5 | PA12 | 193000 | - | Yes | 5/15 | Fail | 133 | 162 |
| Comparative Example 6 | PP | 500 | 2800 | Yes | 0/15 | Fail | 152 | 186 |

| | | | | | | | | |
|---|---|---|---|---|---|---|---|---|
| *Occurrence of POF drip: presence or absence of drip of POF during combustion test of 15 samples | | | | | | | | |

As described in Examples 1 to 5, by jacketing POF using a resin composition in which a suitable amount of a nitrogen compound or a suitable amount of a nitrogen compound and a phosphorus compound is added as a flame retardant to a modified PPE resin, a non halogen-based flame retardant optical fiber cable having excellent flame retardancy, in particular suppressed drip of an optical fiber cable and POF itself in contact with flame, to exhibit pass grade according to VW-1 flame test conforming to UL standards can be obtained, even when it is a thin optical fiber cable in which thickness of the jacketing layer is 25% or so of the outer diameter of POF.

Meanwhile, from an optical fiber cable in which the modified PPE resin itself is used for a jacketing layer without being added with a flame retardant like Comparative Example 1 or an optical fiber cable in which a resin composition added with a flame retardant but outside the specific range is used for a jacketing layer like Comparative Examples 2 and 3, a desired flame retardant effect exhibiting pass grade according to VW-1 flame test conforming to UL standards was not obtained. In addition, for a case in which a resin composition added with inorganic hydroxide that is commonly used as a flame retardant is used for a jacketing layer as described in Comparative Example 4, a desired flame retardant effect was not obtained from a thin optical fiber in which thickness of the jacketing layer is 25% or so of the outer diameter of POF. In addition, as described in Comparative Examples 5 and 6, even with an optical fiber cable having a jacketing layer consisting of a resin composition which contains a nitrogen element or an optical fiber cable having a jacketing layer consisting of a resin composition which contains a nitrogen element and a phosphorus element, drip at combustion cannot be suppressed if the jacketing layer is thin, and the flame retardancy exhibiting pass grade according to a flame test based on VW-1 was not exhibited.

### Reference Signs List

- 11A: Core
- 11B: Cladding
- 12: POF
- 13: Jacketing layer

## Claims

1. A composition for jacketing an optical fiber, the composition comprising a modified PPE resin including a polyphenylene ether resin and a thermoplastic resin compatible with the polyphenylene ether resin, and a non halogen-based flame retardant,
wherein the composition includes a nitrogen compound as the non halogen-based flame retardant and a content of nitrogen element in the composition is in the range of 100000 to 300000 ppm as measured by an elementary analysis.

2. The composition according to claim 1, wherein the nitrogen compound is at least one selected from the group consisting of a melamine-based compound, a triazine-based compound, a guanidine-based compound, a urea-based compound, and a tetrazole-based compound.

3. The composition according to claim 1 or 2, wherein a content ratio of the nitrogen compound is in the range of 5 to 60% by mass relative to the modified PPE resin.

4. The composition according to any one of claims 1 to 3, wherein the non halogen-based flame retardant further includes a phosphorus compound and a content of phosphorus element in the composition is in the range of 10000 to 80000 ppm as measured by an elementary analysis.

5. The composition according to claim 4, wherein the phosphorus compound is at least one selected from the group consisting of phosphoric acid ester, condensed phosphoric acid ester, phosphoric acid salt, condensed phosphoric acid salt, phosphoric acid amide, and condensed phosphoric acid amide.

6. The composition according to claim 4 or 5, wherein a content ratio of the phosphorus compound is in the range of 5 to 50% by mass relative to the modified PPE resin and is in the range of 5 to 100 parts by mass relative to 100 parts by mass of the nitrogen compound.

7. The composition according to any one of claims 1 to 6, wherein the thermoplastic resin includes a styrene-based resin.

8. The composition according to any one of claims 1 to 6, wherein the thermoplastic resin includes a styrene-based elastomer.

9. The composition according to any one of claims 1 to 8, wherein a content ratio of the thermoplastic resin is in the range of 50 to 100 parts by mass relative to 100 parts by mass of the polyphenylene ether resin.

10. The composition according to any one of claims 1 to 9, the composition further comprising a polyolefin-based resin.

11. The composition according to any one of claims 1 to 9, the composition further comprising a polyolefin-based resin which has melt viscosity in the range of 50 to 800 g/10 minutes as measured according to JIS K7210 (190°C, 2.16 kg) or a polyolefin-based resin which has viscosity of 500 centistokes or less as measured according to ASTM D445 (100°C).

12. The composition according to claim 10 or 11, wherein the polyolefin-based resin is low density polyethylene or liquid polyolefin.

13. The composition according to any one of claims 10 to 12, wherein a content ratio of the thermoplastic resin is in the range of 50 to 100 parts by mass relative to 100 parts by mass of the polyphenylene ether resin and a content ratio of the polyolefin-based resin is in the range of 30 to 100 parts by mass relative to 100 parts by mass of the polyphenylene ether resin.

14. An optical fiber cable comprising an optical fiber including a core and at least one cladding layer on a periphery of the core and a jacketing layer for jacketing the optical fiber,
wherein the jacketing layer includes the composition described in any one of claims 1 to 13.

15. The optical fiber cable according to claim 14, wherein a thickness of the jacketing layer is in the range of 10 to 60% of a diameter of the optical fiber.

16. The optical fiber cable according to claim 14 or 15, wherein a diameter of the optical fiber is in the range of 500 to 1200 µm.

17. The optical fiber cable according to any one of claims 14 to 16, wherein the optical fiber is a plastic optical fiber.
